# EUROPEAN PATENT APPLICATION

(11) **EP 1 909 020 A1**
(43) Date of publication of application: **09.04.2008**
(21) Application number: 07117904.8
(22) Date of filing: 04.10.2007
(51) Int. Cl.: F16M 11/10, F16M 11/14

(54) **Article attaching tool**

(30) Priority: 06.10.2006 JP 2006275472
(71) Applicant: Sony Corporation, Minato-ku Tokyo 108-0075 (JP)
(72) Inventor: Kaneda, Hideo c/o Sony Corporation, Tokyo (JP); Kawabata, Makoto c/o Sony Corporation, Tokyo (JP); Kishi, Naotaka c/o Sony Corporation, Tokyo (JP)
(74) Representative: Körber, Martin Hans

(57) **Abstract**

An article attaching tool includes a pair of suction cup devices (20A,20B) each having a suction cup and a case connected to the suction cup for being attached to an attaching object face through the suction cup in a state wherein the suction cup sucks the attaching object face. The article attaching tool further includes a connection section (80) for connecting the cases of the suction cup devices (20A,20B) in such a manner as to allow change of the posture of the cases.

## Description

### CROSS REFERENCES TO RELATED APPLICATIONS

The present invention contains subject matter related to Japanese Patent Application JP 2006-275472, filed in the Japan Patent Office on October 6, 2006, the entire contents of which being incorporated herein by reference.

### BACKGROUND OF THE INVENTION

### 1. Field of the Invention

This invention relates to an article attaching tool.

### 2. Description of the Related Art

An article attaching structure is known and disclosed in Japanese Patent Laid-open No. 2000-287800 wherein a spherical member having a spherical surface is provided on the surface of an article and attached to the surface of a wall or the like through a suction cup device.

### SUMMARY OF THE INVENTION

However, such a heretofore known article attaching structure as described above requires provision of a spherical member on an article in advance and besides requires a suction cup. Therefore, the article attaching structure is disadvantageous in that the increased size of the article sometimes makes handling of the article upon shipment or sales of the article less convenient.

Therefore, it is demanded to provide an article attaching tool which allows an article to be attached to an arbitrary place without providing a special shape to the article and allows miniaturization of the article itself.

According to one embodiment of the present invention, there is provided an article attaching tool including a pair of suction cup devices each having a suction cup and a case connected to the suction cup and configured to be attached to an attaching object face through the suction cup in a state wherein the suction cup sucks the attaching object face, and a connection section configured to connect the cases of the suction cup devices in such a manner as to allow change of the posture of the cases.

In the article attaching tool, the paired suction cup devices are used to attach an article to an attaching object face. Therefore, if a flat face or a curved face which corresponds to the area of the suction cup is provided on the article side, then the article can be attached to a desired location of the attaching object face.

Accordingly, the necessity to provide a spherical member in a projecting manner on the article in advance or to provide a suction cup device on the article is eliminated, and this is advantageous in miniaturization of the article.

The above and other objects, features and advantages of the present invention will become apparent from the following description and the appended claims, taken in conjunction with the accompanying drawings in which like parts or elements denoted by like reference symbols.

### BRIEF DESCRIPTION OF THE DRAWINGS

FIG. 1 is a perspective view of a game machine to be attached using an article attaching tool to which the present invention is applied;
FIG. 2 is an exploded perspective view of the article attaching tool to which the present invention is applied and which is used to attach the game machine of FIG. 1;
FIG. 3 is a perspective view of the article attaching tool of FIG. 2 in an assembled form;
FIG. 4 is a schematic view showing the game machine of FIG. 1 attached using the article attaching tool of FIG. 3;

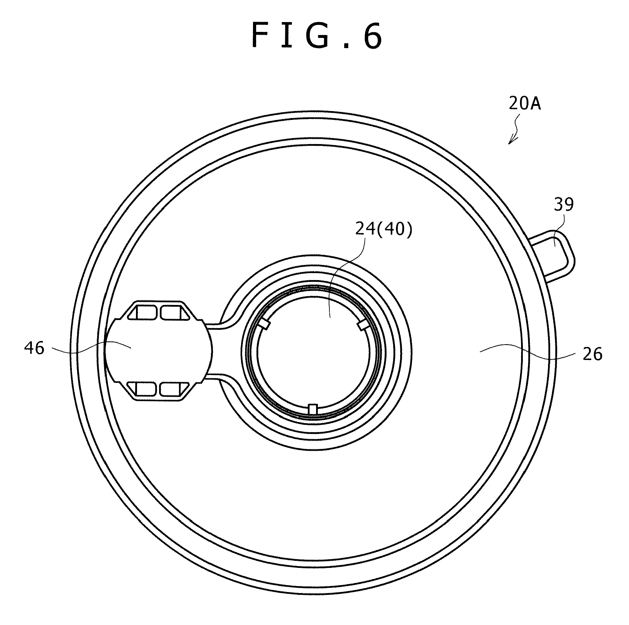

FIGS. 5, 6, 7 and 8 are a perspective view, a top plan view, a side elevational view and a side elevational sectional view, respectively, of a first suction cup device of the article attaching tool of FIG. 3;
FIG. 9 is a view showing a connection section of the article attaching tool of FIG. 3;
FIG. 10 is a side elevational section view of another suction cup device of the article attaching tool of FIG. 3;
FIGS. 11 and 12 are schematic views illustrating attachment of the game machine of FIG. 1 using another article attaching tool to which the present invention is applied;
FIGS. 13A and 13B are a top plan view and a front elevational view, respectively, of a first clamping plate of the article attaching tool shown in FIG. 11;
FIGS. 14A and 14B are a top plan view and a front elevational view, respectively, of a second clamping plate of the article attaching tool shown in FIG. 11;
FIG. 15 is a schematic view of a connection section of the article attaching tool shown in FIG. 11 in an assembled form;
FIG. 16 is a perspective view of an external thread member of the article attaching tool shown in FIG. 11; and
FIGS. 17A and 17B are a top plan view and a front elevational view, respectively, of the external thread member of FIG. 16.

### DETAILED DESCRIPTION OF THE PREFERRED EMBODIMENTS

### First Embodiment

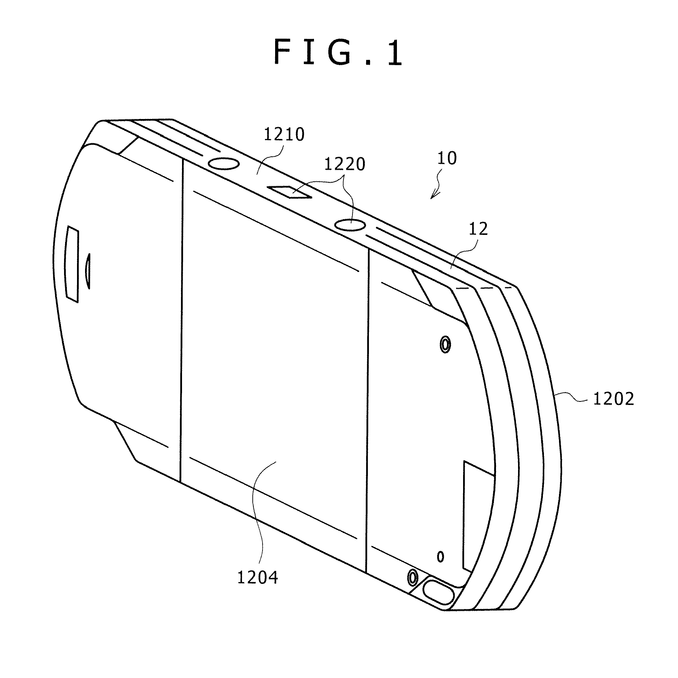

Referring first to FIG. 1, there is shown a game machine to be attached using an article attaching tool according to one embodiment of the present invention. The game machine is generally denoted by 10 and includes a case 12 and a liquid crystal display panel not shown accommodated in and held by the case 12.

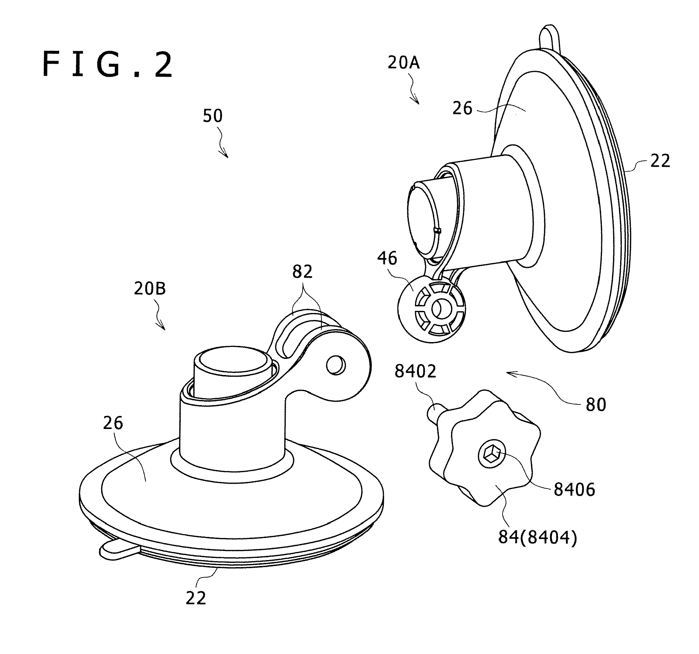

The game machine 10 is attached to an attaching object face 2 such as the surface of a wall or the top face of a desk using an article attaching tool 50 according to a first embodiment of the present invention shown in FIG. 2.

In particular, the game machine 10 is attached by the article attaching tool 50 such that it can change the posture thereof. More particularly, the game machine 10 is attached to the surface of a wall, the top face of a desk or the like such that the posture thereof can be changed.

As seen in FIG. 1, the case 12 of the game machine 10 generally has a form of a rectangular plate. One of the opposite faces of the case 12 in its thicknesswise direction serves as a front face 1202 while the other face serves as a rear face 1204.

The case 12 accommodates and holds the liquid crystal display panel not shown therein such that the display face is opposed to the opening of the front face 1202.

Various operation buttons for controlling the game machine 10 are provided on the front face 1202 of the case 12, and input and output terminals 1220 for allowing connection to an external apparatus and so forth are provided on an upper face 1210 of the case 12. Meanwhile, the rear face 1204 is formed from a flat face or a moderately curved face.

Now, the article attaching tool 50 is described.

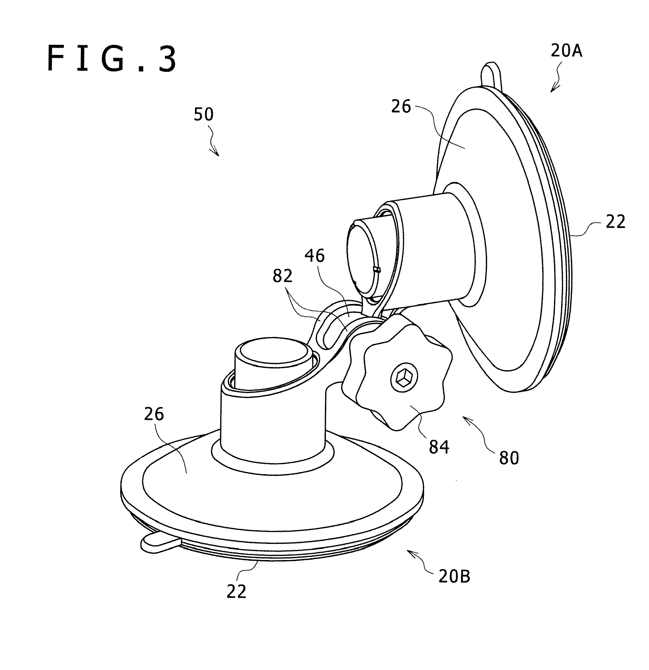

Referring to FIGS. 2 and 3, the article attaching tool 50 includes first and second suction cup devices 20A and 20B, and a connection section 80 for connecting the first and second suction cup devices 20A and 20B to each other.

Referring to FIGS. 2, 3 and 9, the connection section 80 includes a clamped member 46 of the first suction cup device 20A, a pair of clamping plates 82 of the second suction cup device 20B, and an external thread member 84.

First, the first suction cup device 20A is described.

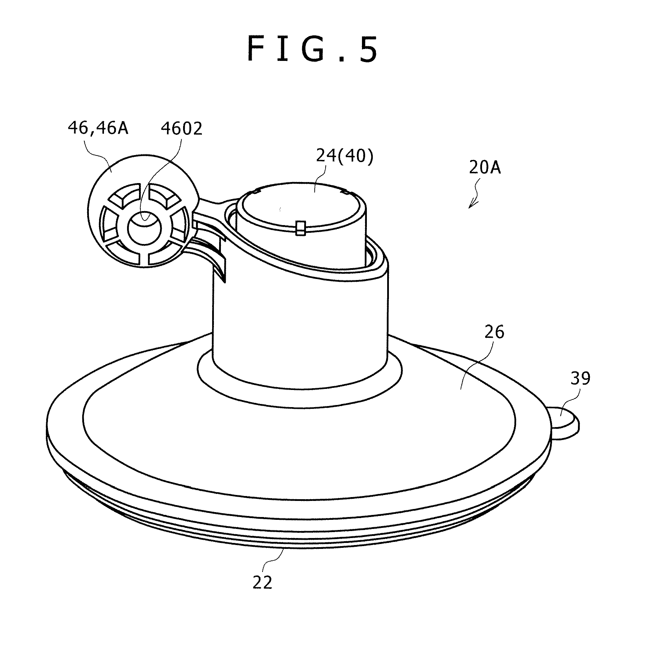

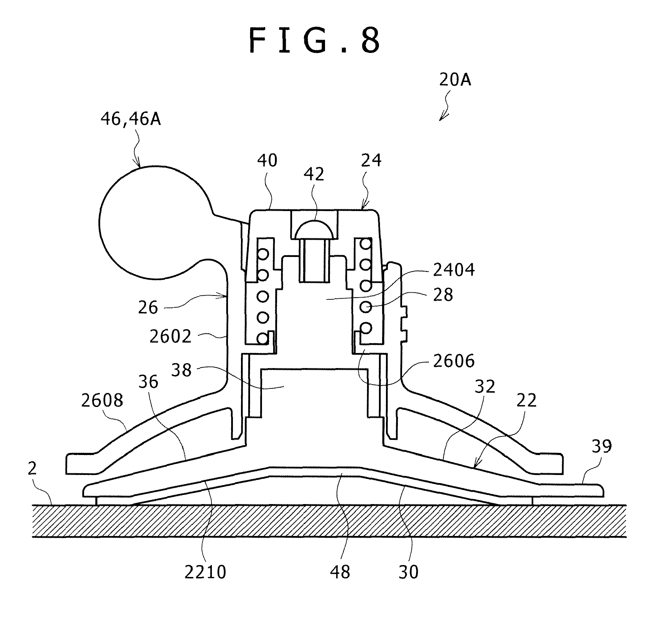

Referring to FIG. 5, the first suction cup device 20A includes a suction cup 22, a shaft-like member 24, a case 26 and a coil spring 28 (refer to FIG. 8).

Referring to FIG. 8, the suction cup 22 has a suction face 30 on one of the opposite faces in a thicknesswise direction thereof and has a rear face 32 as the other face in the thicknesswise direction.

The suction cup 22 includes a disk-shaped suction cup body 36 on which the suction face 30 is formed. A suction cup shaft portion 38 is formed at and extends from the center of the rear face 32 of the suction cup body 36. A center shaft 2404 is connected at a base portion thereof to the suction cup shaft portion 38.

A piece portion 39 for being operated to detach the suction cup 22 is provided in a projecting manner on an outer edge of the suction cup body 36.

The suction cup body 36 can be formed from various heretofore known materials used for an existing suction cup such as, for example, an urethane type material, a styrene type material or a silicon resin type material.

In the present embodiment, a concave attaching face 2210 is formed on a face of the suction cup 22 remote from the rear face 32, and a gel layer 48 formed from gel is bonded to the attaching face 2210 in such a manner as to cover the attaching face 2210. The suction face 30 is formed in a concave shape from the surface of the gel layer 48.

For such gel, gel of a synthetic resin type such as a polyethylene type, a styrene type and a silicon resin type can be used. Further, as the gel of a polyethylene type, for example, "COSMO SUPER GEL" by Cosmo Instruments Co., Ltd. which is an article on the market can be used. As the gel of a styrene type, for example, "NAGFLEX" by Inoac Corporation which is a marketed production can be used. As the gel of a silicon type, for example, "αGEL" by GELTEC Co., Ltd. which is an article on the market can be used.

Further, for the bonding of the gel layer 48 to the attaching face 2210, such a method of bonding by two-color molding or by means of a bonding agent can be adopted.

With such a suction cup 22 as described above, since the suction face 30 thereof is formed from the gel layer 48, even if the attaching object face 2 is formed as a leather embossed face which has fine convexes and concaves or provides a coarse feel, the suction face 30 is deformed following up the convex and concave geometry. Consequently, the suction face 30 can contact closely with the convex and concave face or coarse face without allowing a gap formed therebetween. This is advantageous in that the suction cup 22 sucks a convex and concave face or a coarse face with certainty.

A cap 40 is fixed to an upper end in FIG. 8 of the center shaft 2404 by means of a screw 42. The shaft-like member 24 is formed from the cap 40 and the center shaft 2404.

The case 26 is coupled to the shaft-like member 24 movably in a longitudinal direction of the shaft-like member 24.

The case 26 includes an outer tubular portion 2602 fitted on an outer circumferential face of the cap 40 movable in an axial direction and covering the center shaft 2404, a flange portion 2606 provided on an inner circumferential face of an intermediate portion of the outer tubular portion 2602 in the axial direction, and a conical or annular plate portion 2608 extending conically from one end of the outer tubular portion 2602 in the axial direction and covering the rear face 32 of the suction cup body 36. The clamped member 46 is provided integrally in a projecting manner at the other end of the outer tubular portion 2602 in the longitudinal direction.

In the present embodiment, the clamped member 46 includes a first spherical member 46A formed in a spherical shape of a first radius, and a thread fitting hole 4602 is formed in and through the first spherical member 46A in a diametrical direction.

The coil spring 28 is interposed between the shaft-like member 24 and the case 26 and biases the case 26 in a direction toward the suction face 30.

It is to be noted that the coil spring 28 may be any member only if it biases the case 26 in the direction toward the suction face 30 and may be such a resilient member as a rubber member or a solid damper.

The coil spring 28 extends between the bottom face of a concave portion of the cap 40 and the flange portion 2606 on the outer side of the center shaft 2404 but on the inner side of the outer tubular portion 2602. In the present embodiment, a biasing mechanism is formed from the coil spring 28, cap 40 and flange portion 2606.

Now, suction attachment of the first suction cup device 20A to the attaching object face 2 is described.

First, the suction face 30 of the suction cup 22 of the first suction cup device 20A is opposed to the attaching object face 2 and contacted at an outer circumference thereof with the attaching object face 2 as seen in FIG. 8. In this state, a space in which the air exists is formed between the suction face 30 and the attaching object face 2.

Then, the cap 40 is pressed toward the attaching object face 2, and then the fingers are removed from the cap 40.

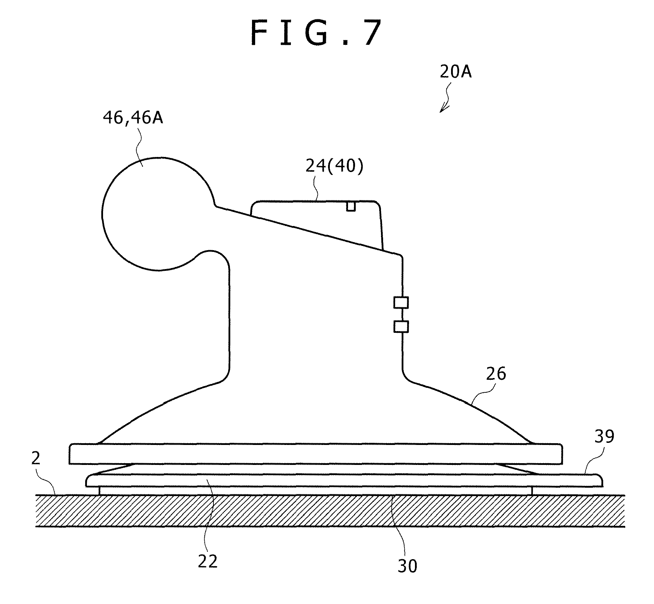

As the cap 40 is pressed first, a central portion of the suction cup 22 is deformed in a direction in which it approaches the attaching object face 2 as seen in FIG. 7 until the suction face 30 closely contacts over the overall area thereof with the attaching object face 2. Thereupon, the air existing in the space described above is discharged from between the suction face 30 and the attaching object face 2 so that a substantially vacuum state is established between the suction face 30 and the attaching object face 2. Consequently, the suction cup 22 is sucked to the attaching object face 2 and the first suction cup device 20A is attached to the attaching object face 2 thereby.

Then, when the fingers are removed from the cap 40, by the resilient force of the coil spring 28, the annular plate portion 2608 of the case 26 contacts over an overall circumference of the outer periphery thereof with the rear face 32 of the suction cup 22 in a state wherein the suction face 30 is sucked to the attaching object face 2. Besides, by the resilient force of the coil spring 28, the annular plate portion 2608 of the case 26 is biased in the contacting direction and the center shaft 2404 is biased in a direction away from the attaching object face 2. Consequently, the first suction cup device 20A is attached with certainty without being rendered unsteady to the attaching object face 2 such as the surface of a wall or the top face of a desk.

Now, description is given of the second suction cup device 20B.

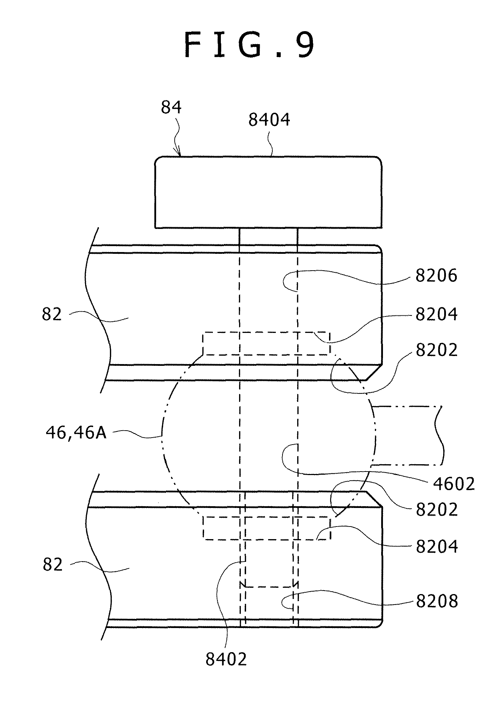

Referring to FIGS. 2 and 9, the second suction cup device 20B is formed similarly to the first suction cup device 20A except that a pair of clamping plates 82 are provided in place of the clamped member 46. The clamping plates 82 are formed integrally at and extend in an opposing relationship to each other from an upper end in FIG. 2 of the outer tubular portion 2602 of the case 26 of the second suction cup device 20B in the longitudinal direction.

A clamping recessed portion is provided at each of inner faces of the clamping plates 82 which oppose to each other.

The clamping recessed portion has a spherical clamping face 8202 formed with the first radius over an overall circumference of a portion thereof at which the clamping recessed portion is open to the inner face of the clamping plate 82. A recess 8204 is formed at a depth greater than an imaginary extension plane of the spherical clamping face 8202 at the center of the spherical clamping face 8202. A hole which opens to the outer face of the clamping plate 82 is formed at the center of the recess 8204. This hole is formed, on one of the pair of clamping plates 82, as a fitting hole 8206 in which the external thread of the external thread member 84 is fitted, but is formed, on the other clamping plate 82, as an internal thread 8208 with which an external thread 8402 of the external thread member 84 is engaged.

Referring to FIG. 2, the external thread member 84 has an external thread 8402 and a head portion 8404.

In the present embodiment, the head portion 8404 has a hexagonal sectional shape whose sides are curved to the inner side so that the head portion 8404 can be gripped with fingers and can be operated to turn with certainty even by weak force.

Further, an engaging hole 8406 for turning operation with which a tool is to be removably engaged such as a hexagonal hole is formed on the top face of the head portion 8404 so that the external thread member 84 can be tightened with certainty also in a limited place.

Referring to FIGS. 2, 3 and 9, with the article attaching tool 50 of the present embodiment, the clamped member 46 is positioned between the clamping plates 82, and the external thread 8402 of the external thread member 84 is fitted into the thread fitting hole 8206 of one of the clamping plates 82 and the thread fitting hole 4602 of the clamped member 46 and screwed into the internal thread 8208 of the other clamping plate 82. If the external thread 8402 is in a loosened state, then the case 26 of each of the first and second suction cup devices 20A and 20B can be rocked around the axis of the external thread 8402. On the other hand, if the external thread member 84 is tightened, then the first spherical member 46A is fixed by the spherical clamping faces 8202 of the clamping plates 82.

In order to attach the game machine 10 to the attaching object face 2 which is the top face of a desk using the article attaching tool 50 of the present embodiment, the suction cup 22 of one of the first and second suction cup devices 20A and 20B is fixed by suction to the rear face 1204 of the game machine 10 while the suction cup 22 of the other one of the first and second suction cup devices 20A and 20B is fixed by suction to the attaching object face 2.

Then, in a state wherein the external thread member 84 fitted in the thread fitting holes 8206 and 4602 is loosely screwed in the fitting hole 8206, the game machine 10 is rocked to a desired posture. Then, when the desired posture is established, the external thread 8402 of the external thread member 84 is tightened to fasten and fix the first spherical member 46A by means of the spherical clamping faces 8202.

Consequently, the game machine 10 can be attached with certainty in the desired posture to the desk.

With the article attaching tool 50 of the present embodiment, since the two first and second suction cup devices 20A and 20B are used to attach an article to the attaching object face 2, if a flat face or a curved face which corresponds to the area of the suction cup 22 is provided on the article side, then the article can be attached to a desired location of the attaching object face 2.

Accordingly, the necessity to provide a spherical member in a projecting manner on the article in advance or to provide a suction cup device on the article is eliminated. Consequently, the article can be miniaturized, which is very advantageous upon shipment or upon display in a shopwindow of the article.

Further, the article attaching tool 50 of the present embodiment is very advantageous in that an article can be attached simply in a desired posture to a desired location of an attaching object face.

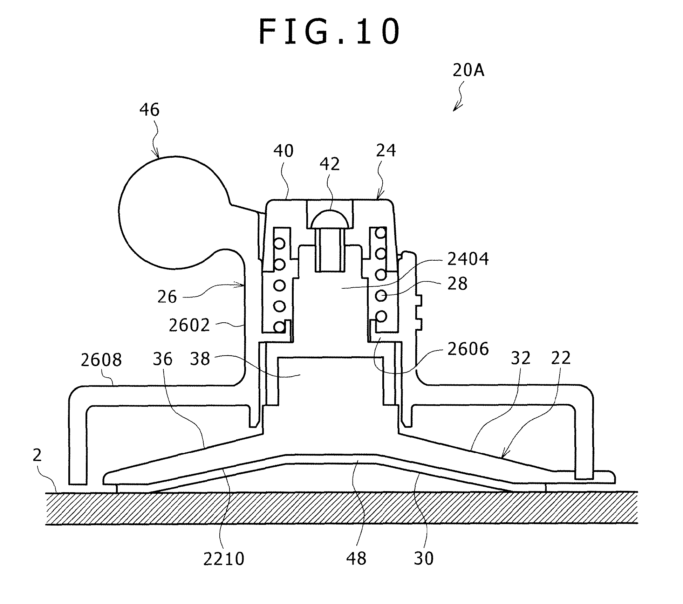

It is to be noted that the first and second suction cup devices 20A and 20B may have arbitrary configuration. For example, the annular plate portion 2608 may be provided such that it contacts with a location of the attaching object face 2 positioned on the outer side of the suction cup 22 in a state wherein the suction face 30 is sucked to the attaching object face 2 as seen in FIG. 10. Alternatively, the coil spring 28 may be replaced by any of various heretofore known configurations of a suction cup device provided between the center shaft 2404 and the case 26. For example, a cam mechanism may be provided such that it biases the annular plate portion 2608 of the case 26 so as to contact at an overall circumference of the outer periphery thereof with the rear face 32 of the suction cup 22 or with a location of the attaching object face 2 positioned on the outer side of the suction cup 22 in a state wherein the suction face 30 is sucked to the attaching object face 2.

### Second Embodiment

Now, a second embodiment of the present invention is described.

The second embodiment is a modification to but is different from the first embodiment in the configuration of the connection member.

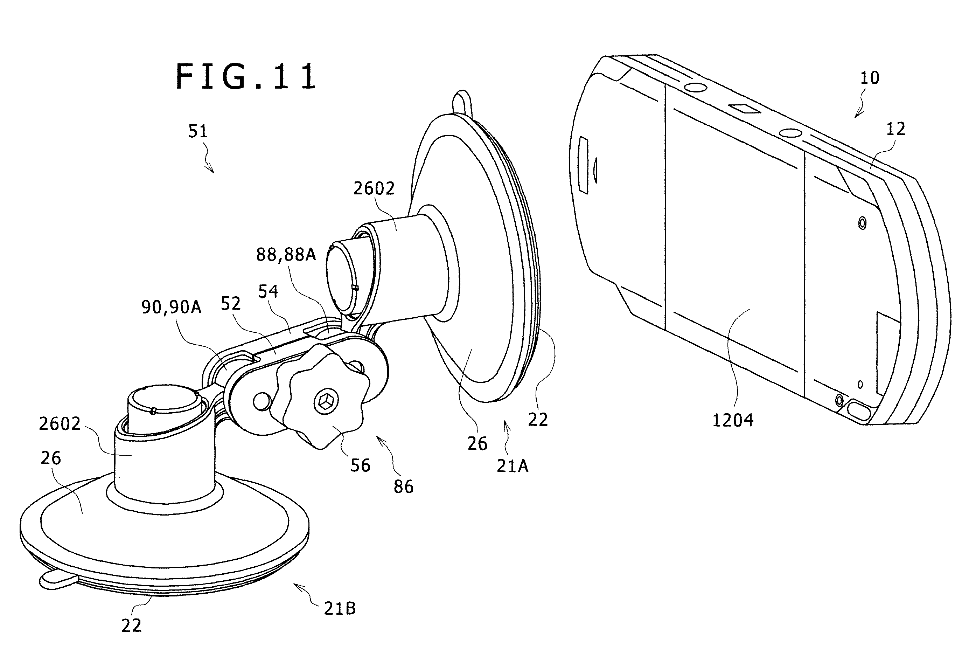

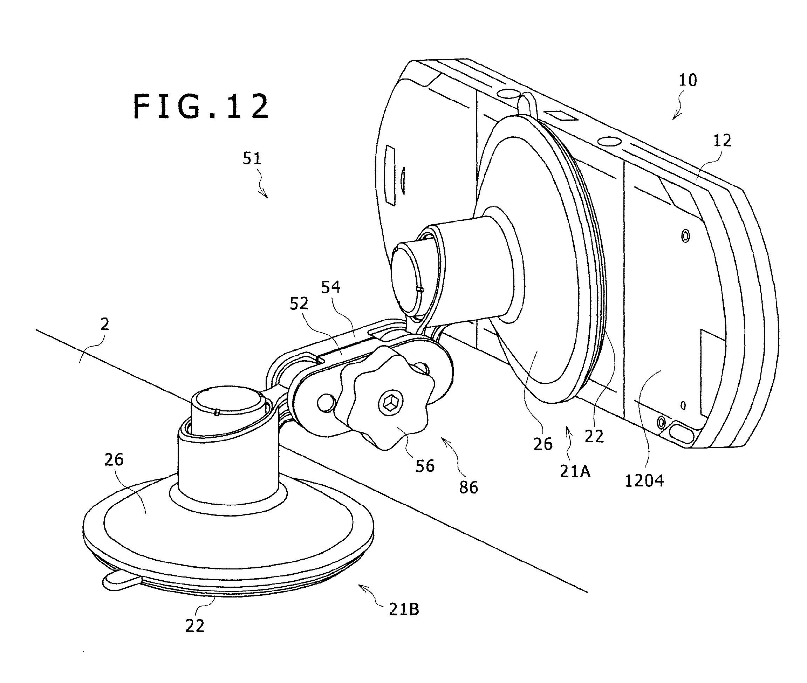

FIGS. 11 and 12 show an article attaching tool 51 according to the second embodiment of the present invention which is used to attach the game machine 10. Incidentally, in the second embodiment, the corresponding parts to the parts of the first embodiment will be denoted by the same symbols used in the first embodiment.

Referring to FIGS. 11 and 12, the article attaching tool 51 according to the second embodiment of the present invention includes first and second suction cup devices 21A and 21B, and a connection member 86 for connecting the two first and second suction cup devices 21A and 21B to each other.

The connection member 86 includes first and second clamped members 88 and 90 provided integrally in a projecting manner on cases 26 of the first and second suction cup devices 21A and 21B, respectively, and first and second clamping plates 52 and 54 capable of clamping the first and second clamped members 88 and 90. The connection member 86 further includes an external thread member 56 for tightening the first and second clamping plates 52 and 54 in a state wherein the first and second clamped members 88 and 90 are clamped by the first and second clamping plates 52 and 54.

The first suction cup device 21A includes, similarly to the first suction cup device 20A in the first embodiment, a suction cup 22, a shaft-like member 24, a case 26 and a coil spring 28. The first clamped member 88 is provided in a projecting manner at a left end in FIG. 11 of the outer tubular portion 2602 of the case 26 in the longitudinal direction.

The first clamped member 88 includes a first spherical member 88A formed spherically with a first radius.

Also the second suction cup device 21B includes, similarly to the first suction cup device 20A in the first embodiment, a suction cup 22, a shaft-like member 24, a case 26 and a coil spring 28. A second clamped member 90 is provided in a projecting manner at a right end in FIG. 11 of the outer tubular portion 2602 of the case 26 in the longitudinal direction.

The second clamped member 90 includes a second spherical member 90A formed spherically with a second radium. In the present embodiment, the first radius and the second radius are equal to each other.

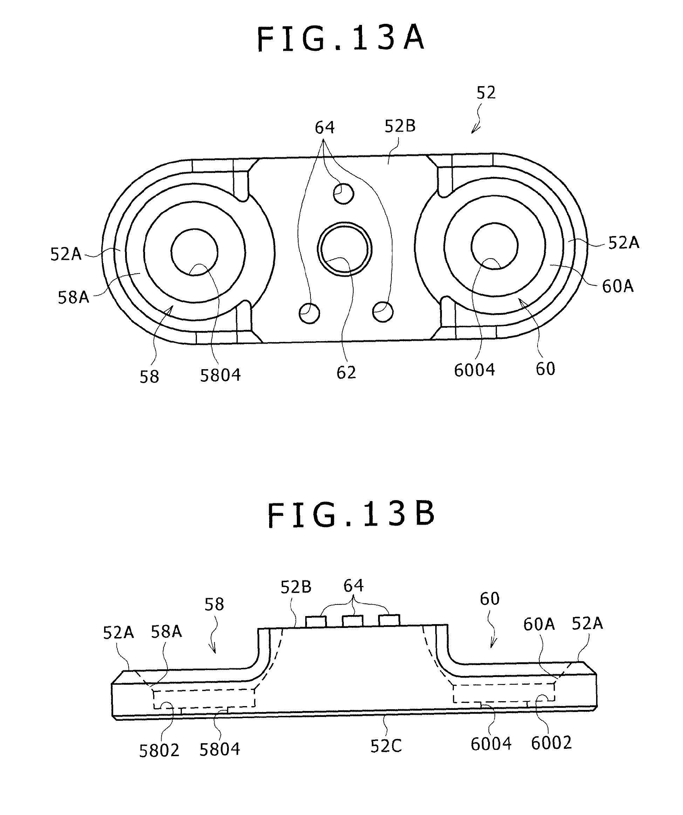

Referring now to FIGS. 13A to 14B, the first and second clamping plates 52 and 54 are formed such that the width thereof in a direction perpendicular to the longitudinal direction is uniform. In the present embodiment, the widths of the first and second clamping plates 52 and 54 are equal to each other, and the opposite ends of the first and second clamping plates 52 and 54 in the longitudinal direction are formed arcuately.

As seen in FIGS. 13A and 13B, a first clamping recessed portion 58 and a second clamping recessed portion 60 are formed at locations of an inner face of the first clamping plate 52 on the opposite sides in the longitudinal direction. Further, a fitting hole 62 is formed at a location of the first clamping plate 52 between the first and second clamping recessed portions 58 and 60 such that it allows insertion therethrough of the external thread of the external thread member 56.

Locations of the inner face of the first clamping plate 52 at the opposite sides in the longitudinal direction are formed as first inner faces 52A which extend on the same plane. Meanwhile, a location of the inner face of the first clamping plate 52 at a central portion in the longitudinal direction is formed as a second inner face 52B which projects from the first inner faces 52A and extends on a plane parallel to the plane of the first inner faces 52A.

Meanwhile, an outer face 52C which is the other face of the first clamping plate 52 in the thicknesswise direction is formed from a single flat face extending in parallel to the inner faces 52A and 52B.

The first clamping recessed portion 58 and the second clamping recessed portion 60 are formed on the first inner faces 52A while the fitting hole 62 is formed one the second inner face 52B.

The first clamping recessed portion 58 has a first spherical clamping face 58A formed with the first radius over the overall circumference of a portion thereof which is open to the corresponding first inner face 52A.

In the present embodiment, a first recessed portion 5802 is formed at a depth greater than an imaginary extension plane of the first spherical clamping face 58A at the center of the first spherical clamping face 58A, and a hole 5804 is formed at the center of the first recessed portion 5802 such that it is open to the outer face 52C.

The second clamping recessed portion 60 has a second spherical clamping face 60A formed with the second radius over the overall circumference of a portion thereof which is open to the first inner face 52A.

In the present embodiment, a second recessed portion 6002 is formed at a depth greater than an imaginary extension plane of the second spherical clamping face 60A at the center of the second spherical clamping face 60A, and a hole 6004 is formed at the center of the second recessed portion 6002 such that it is open to the outer face 52C.

The first and second radii are equal to each other as described above, and the fitting hole 62 is formed at the place of the center between the axis of the first clamping recessed portion 58 and the axis of the second clamping recessed portion 60.

A plurality of pins 64 for preventing turning motion of the first clamping plate 52 are provided in a projecting manner at different locations of the second inner face 52B around the fitting hole 62.

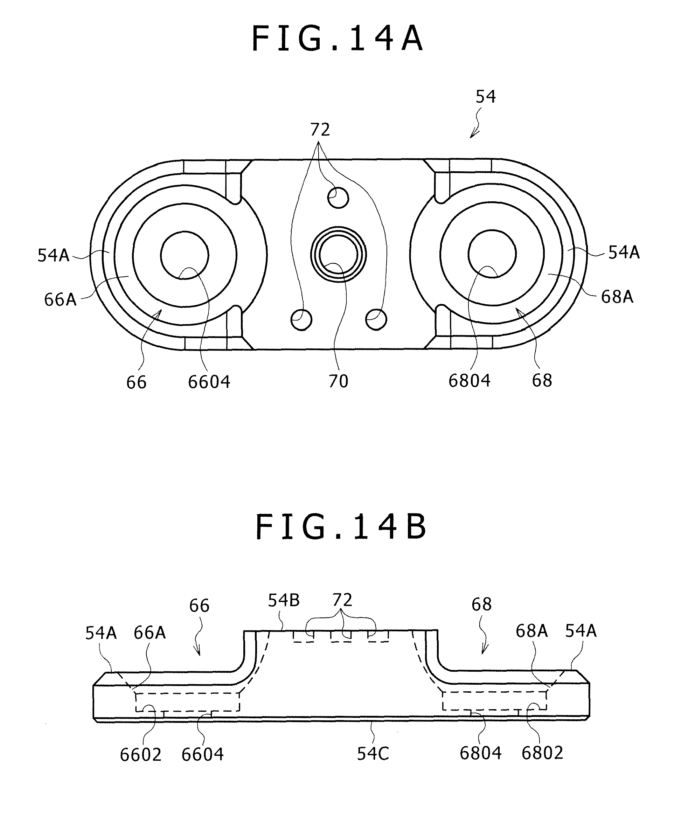

Referring now to FIGS. 14A and 14B, a third clamping recessed portion 66 and a fourth clamping recessed portion 68 are formed at locations of an inner face of the second clamping plate 54 on the opposite sides in the longitudinal direction. Further, an internal thread 70 is formed at a location between the third and fourth clamping recessed portions 66 and 68 for engaging with the external thread of the external thread member 56.

A pair of third inner faces 54A are formed at locations of the inner face of the second clamping plate 54 on the opposite sides in the longitudinal direction such that they extend on the same plane. Further, a location of the inner face at a central portion of the second clamping plate 54 in the longitudinal direction is formed as a fourth inner face 54B which projects from the third inner faces 54A and extends in a plane parallel to the plane of the third inner faces 54A.

Meanwhile, an outer face 54C which is the other face in the thicknesswise direction of the second clamping plate 54 is formed as a single face extending in parallel to the third and fourth internal faces 54A and 54B.

The third clamping recessed portion 66 and the fourth clamping recessed portion 68 are formed on the third internal faces 54A, and the internal thread 70 is formed at the fourth inner face 54B.

The third clamping recessed portion 66 has a third spherical clamping face 66A formed with the first radius over the overall circumference of a portion thereof opened to the corresponding third internal face 54A.

In the present embodiment, a third recessed portion 6602 is formed at a depth greater than an imaginary extension plane of the third spherical clamping face 66A at the center of the third spherical clamping face 66A, and a hole 6604 is formed at the center of the third recessed portion 6602 such that it is opened to the outer face 54C.

The fourth clamping recessed portion 68 has a fourth spherical clamping face 68A formed with the second radius over the overall circumference of a portion thereof opened to the corresponding third internal face 54A.

In the present embodiment, a fourth recessed portion 6802 is formed at a depth greater than an imaginary extension plane of the fourth spherical clamping face 68A at the center of the fourth spherical clamping face 68A, and a hole 6804 is formed at the center of the fourth recessed portion 6802 such that it is open to the outer face 54C.

The internal thread 70 is formed such that it is engaged with the external thread of the external thread member 56 fitted in the fitting hole 62 in a state wherein the axes of the first clamping recessed portion 58 and the third clamping recessed portion 66 are aligned with each other and the axes of the second clamping recessed portion 60 and the fourth clamping recessed portion 68 are aligned with each other.

As described above, the first and second radii have an equal dimension, and the internal thread 70 is formed at the location of the center between the axis of the third clamping recessed portion 66 and the axis of the fourth clamping recessed portion 68.

A plurality of engaging holes 72 are formed at different locations of the fourth inner face 54B around the internal thread 70 for engaging with the turning motion preventing pins 64.

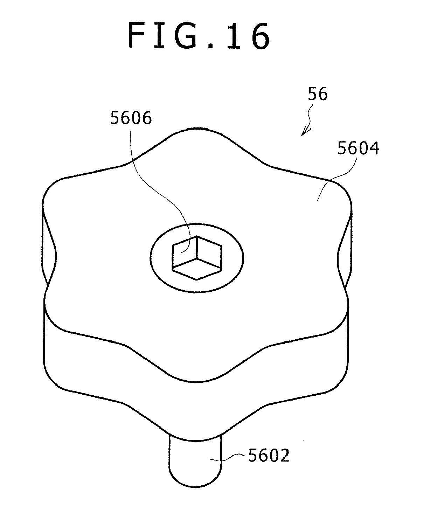

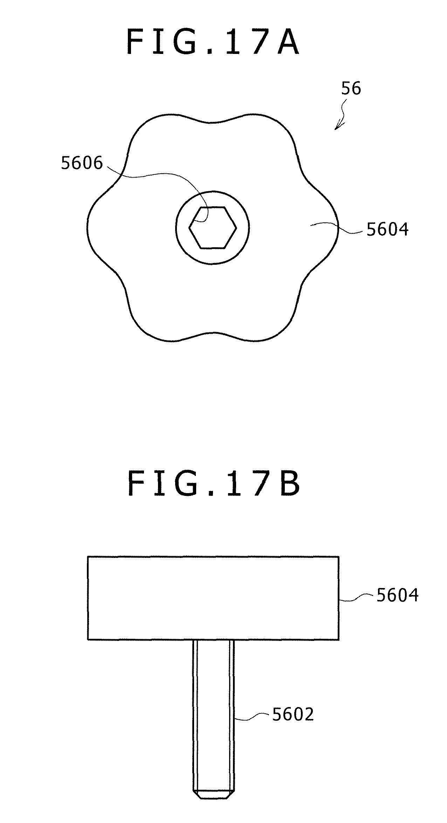

Referring now to FIGS. 16, 17A and 17B, the external thread member 56 has an external thread 5602 and a head portion 5604.

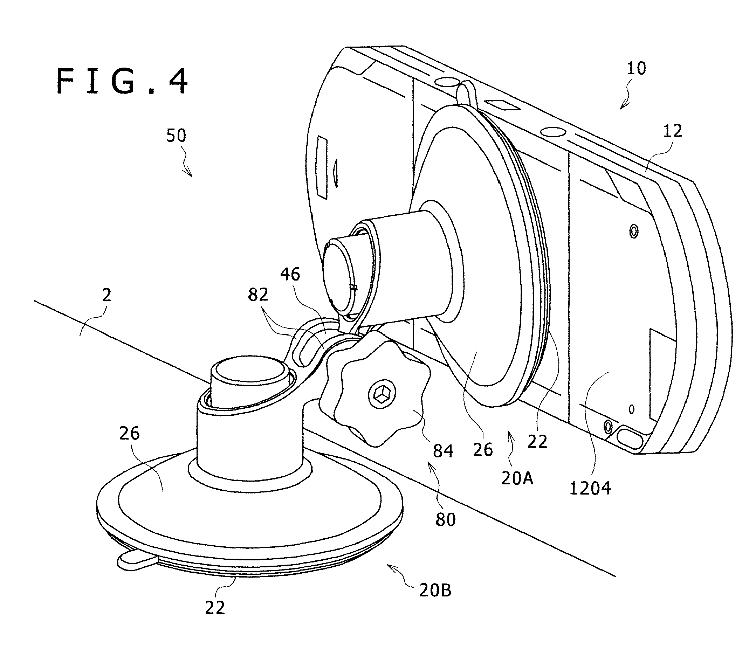

Further, as seen in FIGS. 2 and 4, the head portion 5604 has an outer profile formed with a dimension greater than the width of the first and second clamping plates 52 and 54 such that it can be operated for turning motion.

Further, in the present embodiment, the head portion 5604 has a hexagonal cross section having sides curved to the inner side so that the head portion 5604 can be gripped readily with fingers and operated to turn with certainty even by weak force.

An engaging hole 5606 for turning operation in the form of a hexagonal hole or the like is formed on the upper face of the head portion 5604 such that a tool can be removably engaged therewith so that the external thread member 56 can be tightened with certainty even at a narrow place.

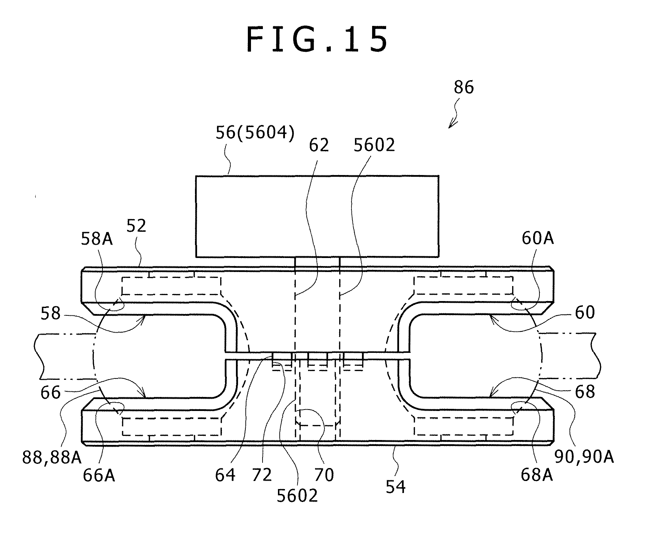

The connection member 86 of the article attaching tool 51 of the present embodiment is assembled in such a manner as seen in FIG. 15. Referring to FIG. 15, the first clamping recessed portion 58 and the third clamping recessed portion 66 are opposed to each other, and the second clamping recessed portion 60 and the fourth clamping recessed portion 68 are opposed to each other. Further, the first spherical member 88A is positioned between the first clamping recessed portion 58 and the third clamping recessed portion 66, and the second spherical member 90A is positioned between the second clamping recessed portion 60 and the fourth clamping recessed portion 68.

Then, the head portion 5604 is operated to tighten the external thread 5602 of the external thread member 56 fitted in the fitting hole 62 into the internal thread 70. Consequently, the first spherical member 88A is clamped between and fixed by the first spherical clamping face 58A and the third spherical clamping face 66A, and the second spherical member 90A is clamped between and fixed by the second spherical clamping face 60A and the fourth spherical clamping face 68A as seen in FIG. 15. It is to be noted that, in the fixed state described, a gap is assured between the second inner face 52B of the first clamping plate 52 and the fourth inner face 54B of the second clamping plate 54, and the inner faces 52B and 54B extend in parallel to each other.

In order to attach the game machine 10 to the attaching object face 2 which is the top face of a desk using the article attaching tool 51 of the present embodiment, the suction cup 22 of one of the first and second suction cup devices 21A and 21B is first fixed by suction to the rear face 1204 of the game machine 10 while the other one of the first and second suction cup devices 21A and 21B is fixed by suction to the attaching object face 2.

Then, in a state wherein the external thread member 56 fitted in the fitting hole 62 is loosened with respect to the internal thread 70, the game machine 10 is rocked to a desired posture. Then, after the desired posture is established, the external thread 5602 of the external thread member 56 is tightened to fix the first and second spherical members 88A and 90A with the spherical clamping faces 58A, 66A, 60A and 68A.

Consequently, the game machine 10 can be attached with certainty in the desired posture to the desk.

Also with the article attaching tool 51 of the second embodiment, similar effects to those of the article attaching tool 50 of the first embodiment can be achieved.

Further, in the article attaching tool 51 of the second embodiment, since the first spherical member 88A of the first suction cup device 21A and the second spherical member 90A of the second suction cup device 21B can be moved independently of each other, a higher degree of freedom in change of the posture of the article can be assured advantageously.

Further, with the article attaching tool 51 of the second embodiment, the first spherical member 88A is clamped between and fixed by the first spherical clamping face 58A and the third spherical clamping face 66A which have a diameter equal to that of the first spherical member 88A. Further, the second spherical member 90A is clamped between and fixed by the second spherical clamping face 60A and the fourth spherical clamping face 68A which have a radius equal to that of the second spherical member 90A. Therefore, clamped fixation of the first and second spherical members 88A and 90A is achieved with certainty.

Further, with the article attaching tool 51 of the second embodiment, both of the first and second spherical members 88A and 90A can be simultaneously placed into a state wherein they can turn freely or into another state wherein they are clamped and fixed simultaneously by a simple operation of loosening or tightening the external thread member 56. Therefore, changing of the posture of the game machine 10 can be performed rapidly, which is advantageous in enhancement of the operability.

Further, in the article attaching tool 51 of the second embodiment, the first and second spherical members 88A and 90A are formed with an equal radius and the fitting hole 62 is formed at a location of the center between the axis of the first clamping recessed portion 58 and the axis of the second clamping recessed portion 60, and besides the internal thread 70 is formed at a location of the center between the axis of the third clamping recessed portion 66 and axis of the fourth clamping recessed portion 68. Therefore, the force of clamping the first spherical member 88A between the first and third spherical clamping faces 58A and 66A and the force of clamping the second spherical member 90A between the second and fourth spherical clamping faces 60A and 68A by tightening the external thread member 56 can be made equal to each other. Consequently, the first and second spherical members 88A and 90A can be clamped and fixed advantageously with certainty.

Further, although the first and second spherical members 88A and 90A may have different radii from each other and the location of the external thread member 56 may be displaced from the position of the center between the axis of the first clamping recessed portion 58 and the axis of the second clamping recessed portion 60, where such a configuration as is used in the article attaching tool 51 of the second embodiment is applied, the structure for making the forces of clamping the first and second spherical members 88A and 90A equal to each other can be simplified. This is advantageous in achievement of reduction of the production cost.

It is to be noted that, while, in the embodiments described above, the article to be attached using the article attaching tool 50 or 51 is the game machine 10, an arbitrary article may be attached using the article attaching tool 50 or 51 only if the article has a face which can be sucked by the suction cup 22. For example, electronic apparatus such as a display unit and audio apparatus such as a speaker may be applied as an article which can be attached using the article attaching tool 50 or 51. For example, where a display unit which composes a car navigation system is attached to the dashboard or the windshield of a car, a high degree of freedom in change of the posture of the display unit can be assured and the display unit can be attached in a desired posture within the car.

Further, while, in the embodiments described above, the attaching object face 2 to which the article attaching tool 50 or 51 is attached is the top face of a desk, the attaching object face 2 may be any face only if it is a flat face or a curved face corresponding to the area of the suction cup 22. For example, the attaching object face 2 may be the surface of a wall in a room, a window panel of a building or the windshield or the dashboard of an automobile.

While preferred embodiments of the present invention have been described using specific terms, such description is for illustrative purposes only, and it is to be understood that changes and variations may be made without departing from the spirit or scope of the following claims.

## Claims

1. An article attaching tool, comprising:
a pair of suction cup devices each having a suction cup and a case connected to said suction cup and configured to be attached to an attaching object face through said suction cup in a state wherein said suction cup sucks the attaching object face; and
a connection section configured to connect the cases of said suction cup devices in such a manner as to allow change of the posture of the cases.

2. The article attaching tool according to claim 1, wherein said connection section includes a clamped member provided integrally in a projecting manner on said case of a first one of said suction cup devices, a pair of clamping plates provided integrally in a projecting manner and in an opposing relationship to each other on a second one of said suction cup devices in such a manner as to clamp said clamped member therebetween, and an external thread member configured to tighten said clamping plates in a state wherein said clamped member is clamped between said clamping plates.

3. The article attaching tool according to claim 2, wherein said clamped member has a first spherical member formed spherically with a first radius;
a clamping recessed portion is provided on each of inner faces of said clamping plates which are opposed to each other;
each of the clamping recessed portions has a first spherical clamping face formed with the first radius over an overall area of the portion thereof open to the inner face of the clamping plate; and
said first spherical member is tightened by the first spherical clamping faces by tightening said clamping plates by means of said external thread member.

4. The article attaching tool according to claim 2, wherein said clamped member has a first spherical member formed spherically with a first radius;
a clamping recessed portion is provided on each of inner faces of said clamping plates which are opposed to each other;
each of the clamping recessed portions has a first spherical clamping face formed with the first radius over an overall area of the portion thereof open to the inner face of the clamping plate;
a fitting hole through which the external thread of said external thread member is to be fitted is formed through said first spherical member so as to pass the center of said first spherical member;
a fitting hole through which the external thread of said external thread member is to be fitted is formed through a bottom portion of said clamping recessed portion of a first one of said clamping plates;
an internal thread configured to engage with the external thread of said external thread member is formed through a bottom portion of said clamping recessed portion of a second one of said clamping plates; and
said first spherical member is clamped by the first spherical clamping faces by engaging said external thread of said external thread member fitted in said fitting hole of said first spherical member and said fitting hole of the first clamping plate with said internal thread to tighten said clamping plates.

5. The article attaching tool according to one of the claims 1 to 4, wherein said connection section includes a clamped member provided integrally in a projecting manner on each of the cases of said suction cup devices, a pair of clamping plates capable of clamping the clamped members of the cases of said suction cup devices, and an external thread member configured to tighten said clamping plates in a state wherein said clamped members are clamped by said clamping plates.

6. An article attaching tool, comprising:
a pair of suction cup devices each having a suction cup and a case connected to said suction cup and configured to be attached to an attaching object face through said suction cup in a state wherein said suction cup sucks the attaching object face; and
a connection section configured to connect the cases of said suction cup devices in such a manner as to allow change of the posture of the cases;
said connection section including a clamped member provided integrally in a projecting manner on each of the cases of said suction cup devices, a pair of clamping plates capable of clamping the clamped members of the cases of said suction cup devices, and an external thread member configured to tighten said clamping plates in a state wherein said clamped members are clamped by said clamping plates,
the clamped member provided on the case of a first one of said suction cup devices including a first spherical member formed spherically with a first radius,
the clamped member provided on the case of a second one of said suction cup devices including a second spherical member formed spherically with a second radius,
said clamping plates including a first clamping plate having an elongated shape and a second clamping plate having an elongated shape,
first and second clamping recessed portions being formed at locations of said first clamping plate on the opposite sides in the longitudinal direction on an inner face of said first clamping plate which opposes to said second clamping plate while a fitting hole is formed at a location between said first and second clamping recessed portions so as to extend through said first clamping plate such that said external thread of said external thread member can be fitted in said fitting hole,
third and fourth clamping recessed portions being formed at locations of said second clamping plate on the opposite sides in the longitudinal direction on an inner face of said second clamping plate which opposes to said first clamping plate while an internal thread is formed at a location between said third and fourth clamping recessed portions so as to engage with said external thread of said external thread member fitted in said fitting hole in a state wherein the axes of said first and third clamping recessed portions are aligned with each other and the axes of said second and fourth clamping recessed portions are aligned with each other,
said first clamping recessed portion having a first spherical clamping face formed with the first radius over an overall circumference of the portion thereof open to the inner face of said first clamping plate,
said second clamping recessed portion having a second spherical clamping face formed with the second radius over an overall circumference of the portion thereof open to the inner face of said first clamping plate,
said third clamping recessed portion having a third spherical clamping face formed with the first radius over an overall circumference of the portion thereof open to the inner face of said second clamping plate,
said fourth clamping recessed portion having a fourth spherical clamping face formed with the second radius over an overall circumference of the portion thereof open to the inner face of said second clamping plate,
said first spherical member being clamped between and fixed by said first and third spherical clamping faces while said second spherical member is clamped between and fixed by said second and fourth spherical clamping faces if said external thread of said external thread member fitted in said fitting hole is tightened into said internal thread while said first spherical member is positioned between said first and third clamping recessed portions and said second spherical member is positioned between said second and fourth clamping recessed portions with said first and third clamping recessed portions opposed to each other and with said second and fourth clamping recessed portions opposed to each other.

7. The article attaching tool according to claim 6, wherein said first clamping recessed portion includes a first recessed portion formed at a depth greater than an imaginary extension plane of said first spherical clamping face at the center of said first spherical clamping face;
said second clamping recessed portion includes a second recessed portion formed at a depth greater than an imaginary extension plane of said second spherical clamping face at the center of said second spherical clamping face;
said third clamping recessed portion includes a third recessed portion formed at a depth greater than an imaginary extension plane of said third spherical clamping face at the center of said third spherical clamping face; and
said fourth clamping recessed portion includes a fourth recessed portion formed at a depth greater than an imaginary extension plane of said fourth spherical clamping face at the center of said fourth spherical clamping face.

8. The article attaching tool according to claim 6 or 7, wherein the first and second radii are equal to each other;
said fitting hole is formed at a location of the center between the axes of said first and second clamping recessed portions; and
said internal thread is formed at a location of the center between the axes of said third and fourth clamping recessed portions.

9. The article attaching tool according to claim 6, 7 or 8, wherein locations of the inner face of said first clamping plate on the opposite sides in the longitudinal direction are formed as first inner faces which extend in the same plane while a location of the inner face of said first clamping plate at a central portion in the longitudinal direction is formed as a second inner face which projects from said first inner faces and extends in a plane parallel to the plane of said first inner faces;
said first and second clamping recessed portions are formed on said first inner faces and said insertion hole is formed on said second inner face;
locations of the inner face of said second clamping plate on the opposite sides in the longitudinal direction are formed as third inner faces which extend in the same plane while a location of the inner face of said second clamping plate at a central portion in the longitudinal direction is formed as a fourth inner face which projects from said third inner faces and extends in a plane parallel to the plane of said third inner faces; and
said third and fourth clamping recessed portions are formed on said third inner faces and said internal thread is formed on said fourth inner face.

10. The article attaching tool according to claim 6, 7 or 8, wherein locations of the inner face of said first clamping plate on the opposite sides in the longitudinal direction are formed as first inner faces which extend in the same plane while a location of the inner face of said first clamping plate at a central portion in the longitudinal direction is formed as a second inner face which projects from said first inner faces and extends in a plane parallel to the plane of said first inner faces;
said first and second clamping recessed portions are formed on said first inner faces and said insertion hole is formed on said second inner face;
locations of the inner face of said second clamping plate on the opposite sides in the longitudinal direction are formed as third inner faces which extend in the same plane while a location of the inner face of said second clamping plate at a central portion in the longitudinal direction is formed as a fourth inner face which projects from said third inner faces and extends in a plane parallel to the plane of said third inner faces;
said third and fourth clamping recessed portions are formed on said third inner faces and said internal thread is formed on said fourth inner face; and
a plurality of pins and a plurality of engaging holes are provided at locations of the second inner face around said fitting hole and locations of the fourth inner face around said internal thread in such a manner as to engage with each other in a state wherein said second and fourth inner faces are opposed to each other with the axes of said first and third clamping recessed portions aligned with each other and with the axes of said second and fourth clamping recessed portions aligned with each other.

11. The article attaching tool according to one of the claims 1 to 5, wherein the width of said first and second clamping plates in a direction perpendicular to the longitudinal direction is uniform;
the widths of said first and second clamping plates are equal to each other;
said external thread member has a head portion having an outer diameter greater than that of said external thread; and
said head portion has an outer diameter greater than the width of said first and second clamping plates.

12. The article attaching tool according to one of the claims 1 to 5, wherein a first one of the opposite faces of said suction cup in the thicknesswise direction is formed as a suction face while a second one of the faces of said suction cup is formed as a back face;
said suction cup device has a center shaft which projects in a direction away from said back face of said suction cup along the thicknesswise direction from the center of the back face;
said case covers the circumference of said center shaft and the rear face of said suction cup and is provided for contacting with an outer peripheral portion of the rear face of said suction cup or a location of the attaching object face positioned on the outer side of said suction cup in a state wherein said suction face is sucked to the attaching object face; and
a biasing mechanism which biases said case in the state wherein said suction face is sucked to the attaching object face in a direction in which said case contacts with the outer peripheral portion of the rear face of said suction cup or the location of the attaching object face and biases said center shaft in a direction away from the attaching object face.

13. The article attaching tool according to claim 12, wherein said case includes a tubular portion configured to cover said center shaft and an annular plate portion provided at an end portion of said tubular portion and configured to cover the rear face of said suction cup in such a manner as to be capable of contacting, at an end thereof, with the outer peripheral portion of the rear face or with the location of the attaching object face which is positioned on the outer side of said suction cup in the state that said suction face is sucked to the attaching object face;
said biasing mechanism includes a coil spring; and
said coil spring is wrapped around said center shaft on the inner side of said tubular portion and extends between the end of said center shaft and a portion of said tubular portion rather near to said annular plate portion.

14. The article attaching tool according to one of the claims 1 to 5, wherein a first one of the opposite faces of said suction cup in the thicknesswise direction is formed as a suction face while a second one of the faces of said suction cup is formed as a back face;
said suction cup includes a disk-shaped suction cup body made of a resiliently deformable material and formed such that one of the opposite faces thereof in the thicknesswise direction forms the rear face and a concave attaching face is formed on the other one of the opposite faces of the disk-shaped suction cup body, and a gel layer bonded to said attaching face so as to cover said attaching face; and
said suction face is formed from a surface of said gel layer.
